# EUROPEAN PATENT APPLICATION

(11) **EP 2 705 755 A1**
(43) Date of publication of application: **12.03.2014**
(21) Application number: 12781966.2
(22) Date of filing: 09.02.2012
(51) Int. Cl.: A22C 5/00, A23L 1/325

(54) **METHOD FOR OBTAINING A FISH-BASED FOOD PRODUCT**

(30) Priority: 06.05.2011 ES 201130720
(71) Applicant: Disgrossa, S.L., 30850 Totana (Murcia) (ES)
(72) Inventor: ALBADALEJO LÓPEZ, José Ramón, E-30850 TOTANA (Murcia) (ES)
(74) Representative: Ungria López, Javier
(86) International application number: PCT/ES2012/070083
(87) International publication number: WO 2012/152964

(57) **Abstract**

The invention relates to the different steps of a method applied to frozen fish, such as tuna, in the corresponding facilities for the production of cooked fish. According to the method, the main body of the corresponding fish is selected, with the fillets separated from the head and tail by cutting the piece of frozen fish. Next, the fish fillets are defrosted in a controlled manner, cleaned and, subsequently, a solution of additives is injected into the fillets. Next, by means of a first vacuum packing step, the fillets are cooked in a water bath and then undergo controlled cooling at between 0°C and 5°C, followed by a second vacuum packing step. The fillets are then placed in cold storage for the subsequent sale of the product.

## Description

### OBJECT OF THE INVENTION

The present invention, as established in the present descriptive specification, refers to a method for obtaining a fish-based food product, wherein the various steps of the process the frozen tuna must undergo in the corresponding facilities for the preparation of cooked tuna are described, without discarding the possibility of the method being applied for other types of fish.

The present method is simple and practical and ensures that the product is conserved correctly, whilst also conserving the intense, original flavor thereof. This thereby conserves a high level of quality in the end product obtained.

### BACKGROUND OF THE INVENTION

Currently, various methods are known for obtaining a fish-based food product, for example desiccating the fish and also fish salting, such as cod.

Other methods consist of defrosting the fish fillets after having separated them from the head and tail at low temperatures, injecting various additive products in order to better conserve them over long periods of time, water being added in this process.

### DESCRIPTION OF THE INVENTION

The method for obtaining a fish-based food product forms the object of the present invention and comprises the following steps:
a.- The fish received is transported in refrigeration units at a low temperature of -18°C or less, in order for the pieces of fish to later be carefully unloaded and placed in stainless steel crates, these crates with the fish being stored in freezer chambers for later use.
b.- The pieces of frozen fish are stored in batches in a freezer chamber at a minimum temperature of -18°C, until they are used later on.
c.- The pieces of frozen fish are cut, separating the head and tail of the fish, the resulting body being divided into four fillets, which are deposited on stainless steel trays.
d.- The fish fillets are defrosted in a controlled manner, raising the temperature but to no more than 5°C, the fish fillets then being kept in a maintenance chamber at a temperature of between 0°C and 6°C.
e.- The fish fillets are prepared by removing the intestinal tract and the internal organs, as well as the spine, blood also being cleaned off and the skin being removed in this step, the fillets being completely clean at the end of this step.
f.- In this step, the fillets are introduced into an injection machine, wherein they are injected with a solution of additives.
   The additives used are as follows:
   - Stabilizers: E-451i, E-450v, E-452i, E-450i.
   - Anti-oxidants: E-300, E-301 and E-331 i.
   - Salt.
g.- Once the solution of additives has been injected, the fillets are cut into smaller fillet portions.
h.- In this step, the fillet portions are packaged in a first wrapper in a first vacuum packing step.
i.- In this step, the portions of vacuum packed fish are cooked in a water bath in water between 70/75°C for three minutes, the inside of the fillet reaching a temperature of around 67°C.
j.- Once the fillet portions have been cooked, they are placed in a refrigerated cooling chamber at a temperature of between 0°C and 5°C, until a temperature margin delimited between these values, 0°C and 5°C, is reached.
k.- In this step, the fillet portions, which have already cooled following the previous step, are extracted from the first wrapper of step "h", in order to carry out a second vacuum packaging step in other second wrappers.
l.- Once the packaging of the previous step has been completed, the fillets are weighed and labelled, before being send to cold storage to await dispatch.
m.- The fillets are then loaded according to orders and clients by means of transportation.
n.- This transportation is by means of refrigerated trucks and is carried out without breaking the product's cold chain.

It must be noted that the wrappers produced in the first and second vacuum packing steps comprise a number of bags in a first embodiment, and in a second embodiment said wrappers comprise a plastic film.

In a first additional step prior to the first vacuum packing step (step "h"), the fillet wrappers are received and placed in the corresponding store in an orderly manner.

The additives injected into the fish fillets are unloaded and put into the corresponding store in a second additional step prior to the step in which the pieces of frozen fish are stored (step "b"), bringing them to the appropriate temperature according to the specifications required by said additives.

In a third additional step prior to the step in which the fillets are completely cleaned (step "e"), the additives are weighed according to the corresponding formula then dissolved in water for later use.

Furthermore, it must be noted that in a first embodiment, the second vacuum packing step (in step "k") comprises the fillet portions of the first vacuum packing step, whilst in a second embodiment, the second vacuum packing step in the abovementioned step ("k"), comprises smaller pieces obtained from the size of the fillet portions of the first vacuum packing step, "h".

Finally, it must be noted that the smallest pieces obtained from the fillet portions of the first vacuum packing step are in slice form, fillet form or dice form. The fillet shaped pieces weigh between 2 and 5 kg.

Raw material may be purchased or acquired in the form of fresh or frozen fillets. It may also be crushed before being cooked.

In a specific example embodiment of the invention, the invention method may be applied to fish, such as frozen tuna, in order to prepare cooked tuna from the fillets thereof, applying the steps described, unique in that the frozen tuna is cut by separating the head and the tail, as described above and unique in that the body is divided into four fillets, with an average weight of 15 kg approximately.

## Claims

1. Method for obtaining a fish-based food product, **characterised in that** it comprises the following steps:
a.- The fish is received and transported in refrigeration units at a low temperature of -18°C or less, in order for the pieces of fish to later be carefully unloaded and placed in stainless steel crates, these crates with the fish being stored in freezer chambers for later use.
b.- The pieces of frozen fish are stored in batches in a freezer chamber at a minimum temperature of -18°C, until they are used later on.
c.- The pieces of frozen fish are cut, separating the head and tail of the fish, the resulting body being divided into four fillets, which are deposited on stainless steel trays.
d.- Controlled defrosting step, wherein the temperature of the fish fillets is raised so that they defrost completely in a controlled manner, without increasing the temperature of the fillets to above 5°C, the fish fillets then being kept in a maintenance chamber at a temperature of between 0°C and 6°C.
e.- The fish fillets are prepared by removing the intestinal tract and the internal organs, as well as the spine, blood also being cleaned off and the skin being removed in this step, the fillets being completely clean once this step has been carried out.
f.- The fillets are introduced into an injection machine, wherein they are injected with a solution of additives.
g.- Once the solution of additives has been injected, the fillets are cut into smaller fillet portions.
h.- The fillet portions are packaged in a first wrapper in a first vacuum packing step.
i.- The portions of vacuum packed fillets are cooked in a water bath in water at 70/75°C for a period of time, the inside of the fillet reaching a temperature of around 67°C.
j.- Once the fillet portions have been cooked, they are placed in a refrigerated cooling chamber at a temperature of between 0°C and 5°C, until a temperature margin delimited between these values, 0°C and 5°C, is reached.
k.- The fillet portions, which have already cooled following the previous step, are extracted from the first wrapper of step h, in order to carry out a second vacuum packaging step in other, second wrappers.
l.- Once the packaging of the previous step has been completed, the fillets are weighed and labelled, before being sent to cold storage to await dispatch.
m.- The fillets are loaded according to orders and clients by means of transportation.
n.- This transportation is by means of refrigerated trucks and is carried out without breaking the product's cold chain.

2. Method for obtaining a fish-based food product according to claim 1, **characterised in that** the wrappers of the first and second vacuum packing steps comprise bags.

3. Method for obtaining a fish-based food product according to claim 1, **characterised in that** the wrappers of the first and second vacuum packing steps comprise plastic films.

4. Method for obtaining a fish-based food product according to any one of the previous claims, **characterised in that** in a first additional step, prior to the first vacuum packing step, step h, the fillet wrappers are received and placed in the corresponding store in an orderly manner.

5. Method for obtaining a fish-based food product according to claim 1, **characterised in that** the additives injected into the fish fillets are unloaded and placed in the corresponding store in a second additional step, prior to the step in which the pieces of frozen fish are stored, step b, being brought to the appropriate temperature, according to the specifications required by these additives.

6. Method for obtaining a fish-based food product, according to any one of the claims 1 or 5, **characterised in that** in a third additional step prior to the step in which the fillets are completely cleaned, step e, the additives are weighed according to the corresponding formula and dissolved in water for later use.

7. Method for obtaining a fish-based food product according to any of the claims 1 or 6, **characterised in that** the additives used are as follows:
- Stabilizers: E-451i, E-450v, E-452i, E-450i.
- Anti-oxidants: E-300, E-301 and E-331 i.
- Salt.

8. Method for obtaining a fish-based food product according to claim 1, **characterized in that** the second vacuum packing step, step k, comprises the fillet portion sizes of the first vacuum packing step.

9. Method for obtaining a fish-based food product according to claim 1, **characterized in that** the second vacuum packing step in step k comprises smaller pieces obtained from the size of the fillet portions of the first vacuum packing step in step h.

10. Method for obtaining a fish-based food product according to claim 9, **characterized in that** the smallest pieces obtained from the fillet portions of the first vacuum packing step are in slice form.

11. Method for obtaining a fish-based food product according to claim 9, **characterized in that** the smallest pieces obtained from the fillet portions of the first vacuum packing step are in fillet form.

12. Method for obtaining a fish-based food product according to claim 11, **characterized in that** the fillet shaped pieces weigh between 2 and 5kg.

13. Method for obtaining a fish-based food product according to claim 9, **characterized in that** the smallest pieces obtained from the fillet portions of the first vacuum packing step are in dice form.

14. Method for obtaining a fish-based food product according to claim 1, **characterized in that** the pieces of fish transported in refrigeration units are transported at a temperature set between -18°C and -20°C.

15. Method for obtaining a fish-based food product according to claim 1, **characterized in that** the vacuum packed fillet portions are cooked in a water bath for 3 minutes, the inside of the fillet reaching a temperature of 67°C.
